# EUROPEAN PATENT APPLICATION

(11) **EP 4 593 150 A1**
(43) Date of publication of application: **30.07.2025**
(21) Application number: 23868567.1
(22) Date of filing: 19.09.2023
(51) Int. Cl.: H01M 10/058, H01M 50/451, H01M 50/434, H01M 50/417, H01M 50/423, H01M 10/052, H01M 4/02

(54) **ELECTRODE ASSEMBLY AND SECONDARY BATTERY COMPRISING SAME**

(30) Priority: 19.09.2022 KR 20220118219
(71) Applicant: LG Energy Solution, Ltd., Seoul 07335 (KR)
(72) Inventor: LEE, Kwang Soo, Daejeon 34122 (KR); KIM, Hyoung Kwon, Daejeon 34122 (KR)
(74) Representative: Goddar, Heinz J.
(86) International application number: PCT/KR2023/014194
(87) International publication number: WO 2024/063515

(57) **Abstract**

An electrode assembly of the present invention includes a first electrode coated with a first electrode active material layer, a second electrode coated with a second electrode active material layer, and a separator disposed between the first electrode and the second electrode, wherein the separator includes: a porous base material which is disposed between the first electrode and the second electrode and in contact with the first electrode active material layer; and a coating layer which is in contact with the second electrode active material layer and provided on a surface of the porous base material, wherein frictional coefficients between the first electrode active material layer and the porous base material and between the second electrode active material layer and the coating layer correspond to each other.

## Description

### TECHNICAL FIELD

### CROSS-REFERENCE TO RELATED APPLICATION

The present application claims the benefit of the priority of Korean Patent Application No. 10-2022-0118219, filed on September 19, 2022, which is hereby incorporated by reference in its entirety.

### TECHNICAL FIELD

The present invention relates to an electrode assembly that improves a difference in frictional force between a positive electrode and a separator, a negative electrode and a separator, and a secondary battery including the same.

### BACKGROUND ART

In general, secondary batteries refer to chargeable and dischargeable, unlike primary batteries that are not chargeable. The secondary batteries are being widely used for mobile phones, notebook computers, and camcorders, electric vehicles, and the like.

The secondary batteries are classified into a can-type secondary battery, in which an electrode assembly is embedded in a metal can, and a pouch-type secondary battery, in which an electrode assembly is embedded in a pouch.

A cylindrical secondary battery includes an electrode assembly, a can accommodating the electrode assembly, and a cap assembly mounted in an opening of the can.

The pouch-type secondary battery includes an electrode assembly, and a pouch accommodating the electrode assembly, and the pouch includes an accommodation part accommodating the electrode assembly, and a sealing part sealing the accommodation part.

The electrode assembly has a structure in which electrodes and separators are alternately disposed, and the electrodes include a positive electrode and a negative electrode.

In the cylindrical-type secondary battery, the positive and negative electrodes are alternately disposed with a separator therebetween and then wound into a jelly-roll shape to manufacture an electrode assembly.

Here, in the cylindrical secondary battery, contraction and expansion occur repeatedly in the positive electrode and negative electrode during charging and discharging. Here, friction repeatedly occurs between the positive electrode and the separator and between the negative electrode and the separator.

However, the cylindrical secondary battery has a problem in that abrasion and distortion occur toward the electrode with higher frictional force due to the difference in frictional force between the positive electrode and the separator and between the negative electrode and the separator, resulting in performance problem and internal short circuit.

### DISCLOSURE OF THE INVENTION

### TECHNICAL PROBLEM

An object of the present invention is to provide an electrode assembly in which a difference in frictional force between a positive electrode and a separator and between a negative electrode and a separator is improved to prevent abrasion and distortion between the positive electrode and the separator and between the negative electrode and the separator from occurring, thereby preventing performance problem and internal short circuit from occurring, and a secondary battery including the same.

### TECHNICAL SOLUTION

An electrode assembly of the present invention may include a first electrode coated with a first electrode active material layer, a second electrode coated with a second electrode active material layer, and a separator disposed between the first electrode and the second electrode, wherein the separator may include: a porous base material which is disposed between the first electrode and the second electrode and in contact with the first electrode active material layer; and a coating layer which is in contact with the second electrode active material layer and provided on a surface of the porous base material, wherein frictional coefficients between the first electrode active material layer and the porous base material and between the second electrode active material layer and the coating layer may correspond to each other.

The frictional coefficients between the first electrode active material layer and the porous base material and between the second electrode active material layer and the coating layer may be the same.

In the separator, the porous base material and the coating layer may be determined based on a surface roughness of the first electrode active material layer and a surface roughness of the second electrode active material layer so that the frictional coefficients between the first electrode active material layer and the porous base material and between the second electrode active material layer and the coating layer correspond to each other.

The second electrode active material layer may have a surface roughness rougher than that of the first electrode active material layer, and in the separator, the porous base material may have a surface roughness rougher than that of the coating layer so that the frictional coefficients between the first electrode active material layer and the porous base material and between the second electrode active material layer and the coating layer correspond to each other.

The coating layer may include an inorganic material, and the inorganic material may be made of ceramic.

An electrode assembly of the present invention may include a first electrode coated with a first electrode active material layer, a second electrode coated with a second electrode active material layer, and a separator disposed between the first electrode and the second electrode, wherein the separator may include: a porous base material between the first electrode and the second electrode; a first coating layer which is in contact with the first electrode active material layer and provided on a surface of the porous base material; and a second coating layer which is in contact with the second electrode active material layer and provided on a surface of the porous base material, wherein frictional coefficients between the first electrode active material layer and the first coating layer and between the second electrode active material layer and the second coating layer may correspond to each other.

The frictional coefficients between the first electrode active material layer and the first coating layer and between the second electrode active material layer and the second coating layer may be the same.

In the separator, the first coating layer and the second coating layer may be determined based on a surface roughness of the first electrode active material layer and a surface roughness of the second electrode active material layer so that the frictional coefficients between the first electrode active material layer and the first coating layer and between the second electrode active material layer and the second coating layer correspond to each other.

The second electrode active material layer may have a surface roughness rougher than that of the first electrode active material layer, and in the separator, the first coating layer may have a surface roughness rougher than that of the second coating layer so that the frictional coefficients between the first electrode active material layer and the first coating layer and between the second electrode active material layer and the second coating layer correspond to each other.

Each of the first coating layer and the second coating layer may include an inorganic material, and the inorganic material may be made of ceramic.

The first coating layer and the second coating layer may be made of materials having different surface roughnesses.

The first electrode may be made of a positive electrode, and the second electrode may be made of a negative electrode.

The porous base material may be made of an insulating polymer film.

The polymer film may be made of any one of polyethylene, polyurethane, and polypropylene.

The ceramic may be made of any one of silicon carbide (SiC), silicon nitride (Si₃n₄), zirconium oxide (ZrO₂), aluminum oxide (Al₂O₃), and boehmite (AlOOH).

A secondary battery of the present invention may include the electrode assembly.

### ADVANTAGEOUS EFFECTS

The electrode assembly according to the present invention may include the porous base material and the coating layer, and the frictional coefficient between the first electrode active material layer of the first electrode and the porous base material and the frictional coefficient between the second electrode active material layer of the second electrode and the coating layer may correspond to each other. Due to these characteristics, the abrasion and distortion between the first electrode and the separator and between the second electrode and the separator may be prevented to solve the performance problems, thereby preventing the internal short circuit from occurring.

### BRIEF DESCRIPTION OF THE DRAWINGS

FIG. 1 is a cross-sectional view of an electrode assembly according to a first embodiment of the present invention.
FIG. 2 is a table illustrating a surface roughness of the electrode assembly according to the first embodiment of the present invention.
FIG. 3 is a cross-sectional view of an electrode assembly according to a second embodiment of the present invention.
FIG. 4 is a cross-sectional view of a secondary battery according to a third embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Electrode assembly according to first embodiment of the present invention]

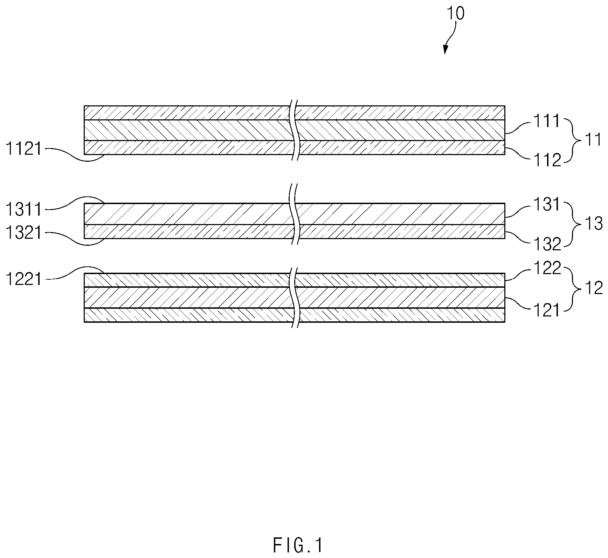

FIG. 1 is a cross-sectional view of an electrode assembly according to a first embodiment of the present invention.

As illustrated in FIG. 1, an electrode assembly 10 according to a first embodiment of the present invention includes a first electrode 11, a second electrode 12, and a separator 13 disposed between the first electrode 11 and the second electrode 12.

### First electrode

The first electrode 11 includes a first collector 111 having a long sheet shape and a first electrode active material layer 112 applied on one or both surfaces of the first collector 111.

The first electrode 11 is a positive electrode, the first collector 111 is a positive electrode collector, and the first electrode active material layer 112 is a positive electrode active material layer.

Here, the first electrode active material layer 112 may be any one of LiCoO₂, LiNiO₂, LiMn₂O₄, LiCoPO₄, LiFePO₄, and LiNiMnCoO₂.

### Second electrode

The second electrode 12 includes a second collector 121 having a long sheet shape and a second electrode active material layer 122 applied on one or both surfaces of the second collector 121.

The second electrode 12 may be a negative electrode, the second collector 121 may be a negative electrode collector, and the second electrode active material layer 122 may be a negative electrode active material layer.

The second electrode active material layer 122 may be any one of natural graphite, artificial graphite, carbonaceous material, lithium-containing titanium complex oxide (LTO), Si, Sn, Li, Zn, Mg, Cd, Ce, and Ni.

The first and second collectors 111 and 121 are not particularly limited as long as they have conductivity without causing chemical changes in the battery. For example, the first collector 111 and the second collector 121 may be any one of copper, stainless steel, aluminum, nickel, titanium, and calcined carbon.

### Separator

The separator 13 includes a porous base material 131 disposed between the first electrode 11 and the second electrode 12 and in contact with the first electrode active material layer 112, and a coating layer that is in contact with the second electrode active material layer 122 and provided on a surface of the porous base material 131.

The porous base material 131 may be a microporous film or non-woven fabric made of a single material or a mixture of two or more materials selected from the group consisting of a polyolefin-based resin, a fluorine-based resin, a polyester-based resin, a polyacrylonitrile resin, and a cellulose-based material.

In addition, the porous base material 131 may be made of a polymer film having insulating properties. For example, the polymer film may be made of any one of polyethylene, polyurethane, and polypropylene.

The coating layer 132 may be an inorganic material. The inorganic material may be made of ceramic. For example, the ceramic may be made of any one of silicon carbide (SiC), silicon nitride (Si₃n₄), zirconium oxide (ZrO₂), aluminum oxide (Al₂O₃), and boehmite (AlOOH).

The electrode assembly 10 according to the first embodiment of the present invention is obtained based on the first electrode 11, the second electrode 12, and the separator 13, which have the above structure. That is, the first electrode 11 and the second electrode 12 are alternately disposed with the separator 13 therebetween and then wound into a jelly-roll shape to obtain the electrode assembly 10. Then, the electrode assembly 10 according to the first embodiment of the present invention is accommodated in the case 20 to manufacture the secondary battery, and the secondary battery undergoes a charging and discharging process to improve battery performance.

Here, the electrode assembly according to the related art has a problem in that abrasion and distortion occurs toward the electrode having relatively large frictional force due to a difference in frictional coefficient between the first electrode and the separator and between the second electrode and the separator, resulting in performance problem and internal short circuit.

The frictional coefficient is obtained by quantifying a degree to which two objects do not easily slip and is expressed as µ. The frictional coefficient is a unitless integer.

In order to solve the above problem, the electrode assembly 10 according to the first embodiment of the present invention has corresponding frictional coefficients between the first electrode 11 and the separator 13 and between the second electrode 12 and the separator 13.

That is, there are corresponding frictional coefficients between the first electrode active material layer of the first electrode 11 and the porous base material 131 and between the second electrode active material layer of the second electrode 12 and the coating layer 132. Thus, since there is no difference in frictional force between the first electrode 11 and the separator 13 and between the second electrode 12 and the separator 13, the abrasion and distortion may be prevented to prevent the performance problem and the internal short circuit from occurring.

Particularly, the frictional coefficients between the first electrode active material layer 112 and the porous base material 131 and between the second electrode active material layer 122 and the coating layer 132 may be the same. Thus, the electrode assembly 10 has no frictional coefficient deviation between the first electrode active material layer 112 and the porous base material 131 and between the second electrode active material layer 122 and the coating layer 132 to significantly prevent the abrasion and distortion from occurring.

Since it is difficult to match the frictional coefficient between the first electrode active material layer 112 and the porous base material 131 and the frictional coefficient between the second electrode active material layer 122 and the coating layer 132, there may be an error tolerance range in frictional coefficient between the first electrode active material layer 112 and the porous base material 131 and between the second electrode active material layer 122 and the coating layer 132. That is, it is determined that the frictional coefficient between the first electrode active material layer 112 and the porous base material 131 and the frictional coefficient between the second electrode active material layer 122 and the coating layer 132, which are within the error tolerance range, correspond to each other. The error tolerance range may be 0.05 to 0.50. Preferably, the error tolerance range may be 0.1 to 0.2. Here, if the error tolerance is less than 0.05, a precision process is required to deteriorate workability, and if it is more than 0.50, the abrasion and distortion may occur, like that in the related art.

Referring to FIG. 1, in the electrode assembly 10 according to the first embodiment of the present invention, the porous base material 131 and the coating layer 132 of the separator 13 may be determined based on a surface roughness of the first electrode active material layer 112 and a surface roughness of the second electrode active material layer 122. Thus, there are the corresponding frictional coefficients between the first electrode 11 and the separator 13 and between the second electrode 12 and the separator 13.

As a first example, the second electrode active material layer 122 has a surface having a surface roughness rougher than that of the first electrode active material layer 112. Thus, in the separator 13, the porous base material 131 having the surface roughness rougher than that of the coating layer 132 is determined based on the surface roughness of the first electrode active material layer 112 and the surface roughness of the second electrode active material layer 122.

As a second example, the porous base material 131 is determined based on the surface roughness of each of the first electrode active material layer 112, the second electrode active material layer 122, and the coating layer 132. In other words, the porous base material 131 is determined so that the sum of the surface roughnesses of the second electrode active material layer 122 and the surface roughness of the coating layer 132 and the sum of the surface roughnesses of the first electrode active material layer 122 and the surface roughness of the porous base material 131 correspond to each other. In summary, the surface roughness of each of the first electrode active material layer 112, the second electrode active material layer 122, and the coating layer 132 is obtained, and then, the porous base material is determined so that the surface roughnesses correspond to each other.

As a third example, the coating layer 132 is determined based on the surface roughness of each of the first electrode active material layer 112, the second electrode active material layer 122, and the porous base material 131. That is, after obtaining the surface roughness of each of the first electrode active material layer 112, the second electrode active material layer 122, and the porous base material 131, the coating layer 132 is determined so that the surface roughnesses correspond to each other.

In the following experimental examples, the surface roughness of each of the first electrode active material layer, the second electrode active material layer, the porous base material, and the coating layer is measured based on an arithmetic average roughness (Ra).

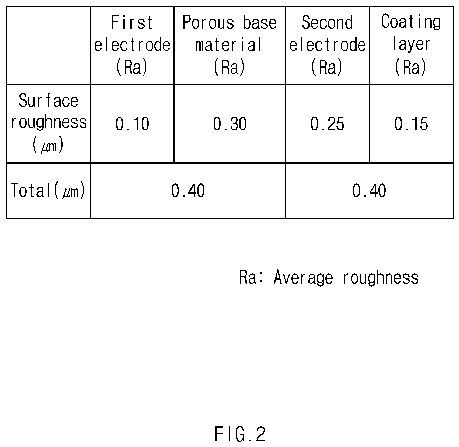

As an experimental example, referring to FIG. 2, the surface roughness of the first electrode active material layer 112 was measured to be 0.1, the surface roughness of the second electrode active material layer 122 was measured to be 0.25, the surface roughness of the first electrode active material layer 112 was measured to be 0.25, and the surface roughness of the porous base material 131 was measured to be 0.3. Thus, the coating layer 132 is made of a material having a surface roughness of 0.15.

In this manner, there are corresponding frictional coefficients between the first electrode active material layer 112 and the porous base material 131 and between the second electrode active material layer 122 and the coating layer 132.

Therefore, the electrode assembly 10 according to the first embodiment of the present invention may have the corresponding frictional coefficients between the first electrode active material layer 112 and the porous base material 131 and between the second electrode active material layer 122 and the coating layer 132 to prevent the abrasion and distortion between the first electrode 11 and the separator 13 and between the second electrode 12 and the separator 13, thereby solving the performance problems and preventing the internal short circuit.

Hereinafter, in descriptions of another embodiment of the present invention, constituents having the same function as the above-mentioned embodiment have been given the same reference numeral in the drawings, and thus duplicated description will be omitted.

### [Electrode assembly according to second embodiment of the present invention]

FIG. 1 is a cross-sectional view of an electrode assembly according to a second embodiment of the present invention.

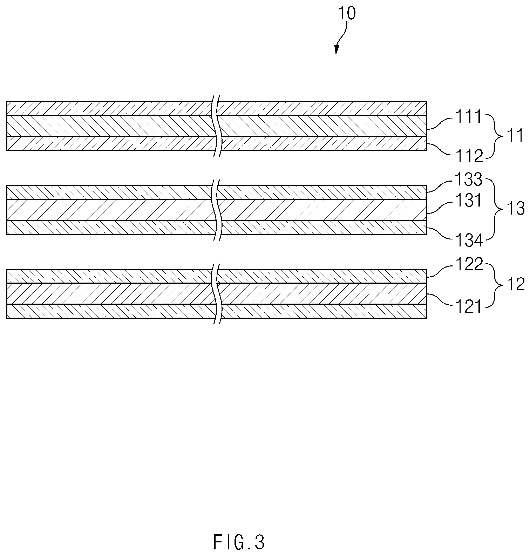

As illustrated in FIG. 3, an electrode assembly 10 according to a second embodiment of the present invention includes a first electrode 11 coated with a first electrode active material layer 112, a second electrode 12 coated with a second electrode active material layer 122, and a separator 13 disposed between the first electrode 11 and the second electrode 12.

Here, the first electrode 11 and the second electrode 12 have the same structure and function as the first electrode 11 and the second electrode 12 according to the first embodiment described above, and thus are given with the same reference numerals, and as a result, duplicated descriptions will be omitted.

### Separator

The separator 13 includes a porous base material 131 disposed between the first electrode 11 and the second electrode 12, a first coating layer 133 that is in contact with the first electrode active material layer 112 and provided on a surface of the porous base material 131, and a second coating layer 134 that is in contact with the second electrode active material layer 122 and provided on a surface of the porous base material 131.

The porous base material 131 has the same structure and function as the porous base material 131 according to the first embodiment described above and thus are given with the same reference numerals are used, and as a result, duplication descriptions will be omitted.

Each of the first coating layer 133 and the second coating layer 134 may include an inorganic material, and the inorganic material may be made of ceramic. For example, the ceramic may be made of any one of silicon carbide (SiC), silicon nitride (Si₃n₄), zirconium oxide (ZrO₂), aluminum oxide (Al₂O₃), and boehmite (AlOOH).

Here, the electrode assembly 10 according to the second embodiment of the present invention has corresponding frictional coefficients between the first electrode active material layer 112 and the first coating layer 133 and between the second electrode active material layer 122 and the second coating layer 134.

In particular, the electrode assembly 10 according to the second embodiment of the present invention may have the same frictional coefficient between the first electrode active material layer 112 and the first coating layer 133 and between the second electrode active material layer 122 and the second coating layer 134.

It is difficult to correspondingly match the frictional coefficient between the first electrode active material layer 112 and the first coating layer 133 with the frictional coefficient between the second electrode active material layer 122 and the second coating layer 134. Of course, even if the frictional coefficients are matched, precision processing is required to deteriorate workability. Thus, an error tolerance range may exist in the frictional coefficient between the first electrode active material layer 112 and the first coating layer 133 and the frictional coefficient between the second electrode active material layer 122 and the second coating layer 134.

That is, it is determined that the frictional coefficient between the first electrode active material layer 112 and the first coating layer 133 and the frictional coefficient between the second electrode active material layer 122 and the second coating layer 134, which are within the error tolerance range, correspond to each other. The error tolerance range may be 0.05 to 0.50. Preferably, the error tolerance range may be 0.1 to 0.2.

The electrode assembly 10 according to the second embodiment of the present invention has corresponding frictional coefficients between the first electrode active material layer 112 and the first coating layer 133 and between the second electrode active material layer 122 and the second coating layer 134 based on a surface roughness of each of the first electrode active material layer 112, the second electrode active material layer 122, the first coating layer 133, and the second coating layer 134.

That is, the first coating layer 133 and the second coating layer 134 may be set to have the same surface roughness or may be set to have different surface roughnesses based on the surface roughness of the first electrode active material layer 112 and the second electrode active material layer 122. Thus, the frictional coefficients between the first electrode active material layer 112 and the first coating layer 133 and between the second electrode active material layer 122 and the second coating layer 134 may be determined to correspond to each other.

As a first example, in the electrode assembly 10 according to the second embodiment of the present invention, when the second electrode active material layer 122 has a surface roughness rougher than that of the first electrode active material layer 112, in the separator 13, the first coating layer 133 and the second coating layer 134 are determined based on the surface roughness of the first electrode active material layer 112 and the surface roughness of the second electrode active material layer 122. That is, the first coating layer has a surface roughness rougher than that of the second coating layer so that the frictional coefficients between the first electrode active material layer 112 and the first coating layer 133 and between the second electrode active material layer 122 and the second coating layer 134 correspond to each other.

As a second example, the second coating layer 134 is determined based on the surface roughness of each of the first electrode active material layer 112, the second electrode active material layer 122, and the first coating layer 133. That is to say, the second coating layer 134 may be determined so that the sum of the surface roughnesses of the first electrode active material layer 112 and the first coating layer 133 and the sum of the surface roughnesses of the second electrode active material layer 122 and the second coating layer 134 correspond to each other. In summary, after obtaining the surface roughness of each of the first electrode active material layer 112, the second electrode active material layer 122, and the first coating layer 133, the second coating layer 134 is determined so that the surface roughnesses correspond to each other.

As a third example, the first coating layer 133 may be determined based on the surface roughness of each of the first electrode active material layer 112, the second electrode active material layer 122, and the second coating layer 134. That is, after obtaining the surface roughness of each of the first electrode active material layer 112, the second electrode active material layer 122, and the second coating layer 134, the first coating layer 133 is determined so that the surface roughnesses correspond to each other.

In the electrode assembly 10 according to the second embodiment of the present invention, the first coating layer 133 and the second coating layer 134 may be made of any one of materials having different surface roughnesses. That is, the electrode assembly 10 may be determined so that the frictional coefficients correspond to each other by selecting different materials of the first coating layer 133 and the second coating layer 134 based on the surface roughnesses of the first electrode active material layer 112 and the second electrode active material layer 122.

Thus, the electrode assembly 10 according to the second embodiment of the present invention has corresponding frictional coefficients between the first electrode active material layer 112 and the first coating layer 133 and between the second electrode active material layer 122 and the second coating layer 134. Thus, abrasion and distortion between the first electrode and the separator 13 and between the second electrode and the separator 13 may be prevented, and as a result, performance problems and internal short circuit may be prevented.

### [Secondary battery according to third embodiment of the present invention]

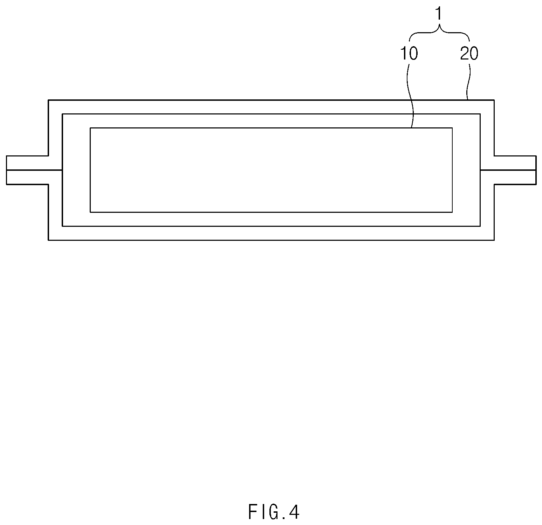

FIG. 4 is a cross-sectional view of a secondary battery according to a third embodiment of the present invention.

A secondary battery 1 according to a third embodiment of the present invention has a structure including the electrode assembly 10 according to the first embodiment or the electrode assembly 10 according to the second embodiment, which are described above.

That is, as illustrated in FIG. 4, the secondary battery 1 according to the third embodiment of the present invention includes an electrode assembly 10 and a case 20 accommodating the electrode assembly 10.

Here, the electrode assembly 10 has the same structure and function as the electrode assembly 10 according to the first embodiment or the electrode assembly 10 according to the second embodiment described above.

Thus, the secondary battery 1 according to the third embodiment of the present invention may be improved in safety by improving the difference in frictional force between the positive electrode and the separator 13 and between the negative electrode and the separator 13.

Although the electrode assembly according to the present invention has been described above with reference to the exemplary drawings, various changes and modifications may be made thereto by one skilled in the art without departing from the scope and spirit of the invention as set forth in the appended claims.

[Description of the Symbols]
1: Secondary battery
10: Electrode assembly
11: First electrode
111: First collector
112: Second electrode active material layer
12: Second electrode
121: Second collector
122: Second electrode active material layer
13: Separator
131: Porous base material
132: Coating layer
133: First coating layer
134: Second coating layer
20: Case

## Claims

1. An electrode assembly comprises a first electrode coated with a first electrode active material layer, a second electrode coated with a second electrode active material layer, and a separator disposed between the first electrode and the second electrode,
wherein the separator comprises:
a porous base material which is disposed between the first electrode and the second electrode and in contact with the first electrode active material layer; and
a coating layer which is in contact with the second electrode active material layer and provided on a surface of the porous base material,
wherein frictional coefficients between the first electrode active material layer and the porous base material and between the second electrode active material layer and the coating layer correspond to each other.

2. The electrode assembly of claim 1, wherein the frictional coefficients between the first electrode active material layer and the porous base material and between the second electrode active material layer and the coating layer are the same.

3. The electrode assembly of claim 1, wherein, in the separator, the porous base material and the coating layer are determined based on a surface roughness of the first electrode active material layer and a surface roughness of the second electrode active material layer so that the frictional coefficients between the first electrode active material layer and the porous base material and between the second electrode active material layer and the coating layer correspond to each other.

4. The electrode assembly of claim 3, wherein the second electrode active material layer has a surface roughness rougher than that of the first electrode active material layer, and
in the separator, the porous base material has a surface roughness rougher than that of the coating layer so that the frictional coefficients between the first electrode active material layer and the porous base material and between the second electrode active material layer and the coating layer correspond to each other.

5. The electrode assembly of claim 1, wherein the coating layer comprises an inorganic material, and
the inorganic material is made of ceramic.

6. An electrode assembly comprises a first electrode coated with a first electrode active material layer, a second electrode coated with a second electrode active material layer, and a separator disposed between the first electrode and the second electrode,
wherein the separator comprises:
a porous base material between the first electrode and the second electrode;
a first coating layer which is in contact with the first electrode active material layer and provided on a surface of the porous base material; and
a second coating layer which is in contact with the second electrode active material layer and provided on a surface of the porous base material,
wherein frictional coefficients between the first electrode active material layer and the first coating layer and between the second electrode active material layer and the second coating layer correspond to each other.

7. The electrode assembly of claim 6, wherein the frictional coefficients between the first electrode active material layer and the first coating layer and between the second electrode active material layer and the second coating layer are the same.

8. The electrode assembly of claim 6, wherein, in the separator, the first coating layer and the second coating layer are determined based on a surface roughness of the first electrode active material layer and a surface roughness of the second electrode active material layer so that the frictional coefficients between the first electrode active material layer and the first coating layer and between the second electrode active material layer and the second coating layer correspond to each other.

9. The electrode assembly of claim 8, wherein the second electrode active material layer has a surface roughness rougher than that of the first electrode active material layer, and
in the separator, the first coating layer has a surface roughness rougher than that of the second coating layer so that the frictional coefficients between the first electrode active material layer and the first coating layer and between the second electrode active material layer and the second coating layer correspond to each other.

10. The electrode assembly of claim 6, wherein each of the first coating layer and the second coating layer comprises an inorganic material, and
the inorganic material is made of ceramic.

11. The electrode assembly of claim 6, wherein the first coating layer and the second coating layer are made of materials having different surface roughnesses.

12. The electrode assembly of claim 1 or 6, wherein the first electrode is made of a positive electrode, and the second electrode is made of a negative electrode.

13. The electrode assembly of claim 1 or 6, wherein the porous base material is made of an insulating polymer film.

14. The electrode assembly of claim 13, wherein the polymer film is made of any one of polyethylene, polyurethane, and polypropylene.

15. The electrode assembly of claim 5 or 10, wherein the ceramic is made of any one of silicon carbide (SiC), silicon nitride (Si₃n₄), zirconium oxide (ZrO₂), aluminum oxide (Al₂O₃), and boehmite (AlOOH).

16. A secondary battery comprising the electrode assembly of claim 1 or 6.
